# EUROPEAN PATENT APPLICATION

(11) **EP 3 572 147 A1**
(43) Date of publication of application: **27.11.2019**
(21) Application number: 18174155.4
(22) Date of filing: 24.05.2018
(51) Int. Cl.: B01J 20/18, E01C 13/00, E01C 13/06, E01C 13/08, B01J 20/28

(54) **A SPORTS FIELD, IN PARTICULAR A TENNIS COURT, A METHOD OF CONSTRUCTING A TENNIS COURT AND TOP LAYER COMPOSITION FOR A COURT**

(71) Applicant: Pintat, Benoit, 68340 Zellenberg (FR)
(72) Inventor: Pintat, Benoit, 68340 Zellenberg (FR)
(74) Representative: Richardt Patentanwälte PartG mbB

(57) **Abstract**

The present invention relates to top layer composition for a playing court, in particular an outside tennis court, a method for constructing a tennis court and a sports field, in particular a tennis court, with a surface layer made of the top layer composition.

Soft courts have many disadvantages as e.g. high construction and maintenance costs, the need for frequent rolling, smoothing and replenishing of the surface materials for keeping the surface in a playable condition and so on.

Many of these problems can be alleviated considerably by sprinkling the surface with water. However, during periods of winds or play, sprinkling is impractical.

It is therefore the purpose of the invention to provide a playing court and a surface for the playing court that reduces the aforementioned disadvantages.

Such purposes are accomplished by a top layer composition for a playing court, in particular an outside tennis court, the top layer composition comprising a mixture of crushed brick and/or quartz sand and/or volcanic ash and a microporous zeolite mineral, wherein the microporous zeolite mineral is present in the amount of 5 % to 70 % of the total mass of the top layer composition, wherein the grain size of the crushed brick and/or quartz sand and/or volcanic ash is smaller than 3.15 mm, and wherein the grain size of the microporous zeolite mineral is between 0.03 mm and 2.2 mm.

## Description

The present invention relates to top layer composition for a playing court, in particular an outside tennis court, a method for constructing a tennis court and a sports field, in particular a tennis court, with a surface layer made of the top layer composition.

The invention is explained below with the reference to tennis courts. This reference does not imply a limitation of the invention, but rather the invention is also applicable to sports fields for sports such a football, soccer, handball, basketball, badminton or other ball games.

Soft surface courts, especially so called clay courts, are preferred by many tennis players. This is due to the fact that playing on soft surfaces is less stressful to the bones, muscles and connective tissues than repetitive playing on hard surface courts.

However, these soft courts have also disadvantages. Construction and maintenance costs are typically very high. In addition, frequent rolling, smoothing and replenishing of the surface materials is required to keep the surface in a playable condition. Additionally, since most of these soft surface courts are constructed outdoors, and are made of porous materials, water retention following ambient rainfall may preclude play on the court surface due to puddles or a general muddy court surface having a slippery consistency.

Hence, courts consisting of gravel, sand, clay and various bonding materials have been developed in the past as a more practical alternative to conventional clay courts.

The construction of tennis courts with a surface covering in the form of a surface layer made of brick-dust or sand is known and described for example in DIN 18 035, sheet 5. Up to now, such tennis courts with a brick-dust surface layer or sand layer have been particularly popular because they guarantee a particularly high level of playing comfort. The sliding behavior on the surface and the bouncing behavior of the ball contribute to the playing comfort. The disadvantage of such brick-dust courts and sand courts is the high maintenance requirement, which is due to the low durability of the water-bonded brick-dust or sand surface layer, as well as the sensitivity to excess water.

The binding of conventional brick-dust or sand layer occurs solely by water, which is why a certain moisture content of the top layer must always be maintained.

After a rainfall or due to sprinkling, the layer of brick-dust or sand absorbs large quantities of water, softening thereby and is not playable in this condition. The brick-dust layer or sand layer, which is soaked with water, blocks the passage of surface water into the water-absorbing lower layer materials. Therefore, puddles often form in the heavily used areas, e.g. in the baseline area. These standing puddles of water following rains preclude the use of the court until the water is removed by evaporation. Another problem occurs in cold weather areas. Water trapped within the void spaces below the surface layer freezes. The expansion that takes place during freezing causes movement of the surface, thereby damaging the surface layer.

Further, a certain degree of moisture content must be maintained at all times in order to guarantee the cohesion and thus the impact strength of the brick-dust or sand surface layer. Due to the comparatively low water retention capacity of brick-dust or sand, regular and frequent watering of the brick-dust or sand layer is necessary to guarantee this necessary moisture content. The frequent watering and the relatively high humidity above the watered surface layer are further problematic.

Another problem is that wind tends to blow away or unevenly rearrange surface materials, especially when the surface is dry. Thus, replacement or smoothing is required.

This problem could be alleviated considerably by sprinkling the surface with water. However, during periods of winds or play, sprinkling is impractical. Another problem with wind is that the top surface tends to dry out, resulting in poor footing for the players and inconsistent ball bounce.

It is therefore an object of the invention to provide a playing court, in particular a tennis court, which has a covering layer of material that guarantees the high level of playing comfort of conventional brick-dust or sand surface layers, but is more durable, requires less maintenance and can be played on more quickly after rain and/or frost. Further, the new top surface material shall have a greater water retention capacity than conventional brick-dust surface layers, in order to significantly reduce the necessity and frequency of watering, when compared to these.

Such objects are accomplished by a top layer composition for a playing court, in particular an outside tennis court. The top layer composition comprises a mixture of crushed brick and/or quartz sand and/or volcanic ash and a microporous zeolite mineral. The microporous zeolite mineral is present in the amount of 5 % to 70 % of the total mass of the top layer composition. Further, the grain size of the crushed brick and/or quartz sand and/or volcanic ash is smaller than 3.15 mm, and the grain size of the microporous zeolite mineral is between 0.03mm and 2.2 mm.

The microporous zeolite mineral is selected from the group consisting of chabazite, eroionite, mordenite, chinoptilolite. faujasite, philipsite, zeolite A, zeolite L, Zeolite Y, zeolite X and ZSM-5. The zeolite used within the scope of the invention may thus be a zeolite that can be natural or obtained by synthesis.

Preferably, a zeolite, which with a Mohs hardness above 3, a strong adsorbent power and a colour, which approximately resembles one of the well-known surface colours (e.g. red, brown, green), is used. Thus, the most preferred microporous zeolite mineral may be of the chabazite and/or clinoptinolite and/or mordenite type.

Further, the specific surface area of the microporous zeolite mineral can be chosen to be smaller than a predetermined maximum specific surface area. The maximum specific surface area of the mineral may for example be determined as the surface specific area that enables the water in the mineral to release, under a certain ambient temperature, at a predefined minimum rate.

Depending of the need of progressive release of water and relative humidity of the top layer surface, the mass content of the microporous zeolite mineral can be chosen.

Preferably the microporous zeolite mineral is present in the amount of 5 % to 70 % of the total mass of the top layer composition; however, to reduce production costs of the top layer composition and/or the synthesis or production of the microporous zeolite mineral, and if the ambient weather conditions allow for it, it is also feasible, that the microporous zeolite mineral is present in the amount of 5.5 % to 50 %% of the total mass of the top layer composition, or in between 6 % to 25 % of the total mass of the top layer composition, or in between 6 % to 15 % of the total mass of the top layer composition.

Since slab or round grains are not compactable and lead to unpleasant and slippery surfaces, the crushed brick (e.g. brick-dust) or quartz sand or the volcanic ash of the present invention can have a grain form, which is compact and/or sharp-edged and/or cubic. The grain size of the crushed brick and/or quartz sand and/or volcanic ash is preferably smaller than 3.15 mm to limit the risk of injury to the skin after a fall.

Due to the fact that the surface strength (stability) and water permeability depend on the grain size distribution, it is envisaged within the present invention that the grain size distribution of the top layer composition, comprising crushed brick (e.g. brick-dust) or quartz sand or the volcanic ash and microporous zeolite minerals, is as follows, namely 20 % to 33 % of the grains have a size smaller than 0.06 mm, 20 % to 50 % of the grains have a size between 0.061 mm and 0.7 mm and 20 % to 33 % of the grains have a size between 0.71 mm and 2.2 mm.

If, for example, there is too much grain with a grain size between 0.70 mm to 2.00 mm, the surface shear strength and also the optics suffer as a result. If there are too many fine particles with a grain size smaller than 0.06 mm, the water permeability and stability of the top surface layer is not satisfactory.

Further, in case the top layer composition comprises a mixture of crushed brick (e.g. brick-dust) and microporous zeolite minerals, it is within the scope of the invention that the overall grain size distribution of the top layer composition is as follows, namely less than 33 % of the grains have a size smaller than 0.06 mm, approximately 40 % of the grains have a size between 0.061 mm and 0.7 mm and less than 33 % of the grains have a size between 0.71 mm and 2.0 mm.

Since the use of old material or too soft material for the production of the top layer composition, comprising e.g. a mixture of crushed brick (e.g. brick-dust) or quartz sand or volcanic ash and microporous zeolite mineral, accelerates the wear of the composition and as a result causing the water permeability and stability of the top layer to be impaired more rapidly, it is further envisioned for the present invention, since the microporous zeolite minerals have a hardness between 3 and 4 on the Mohs scale, which is lower than the Mohs hardness of brick-dust or quartz sand, that 3 % to 30 % of the used fraction of microporous zeolite mineral grains have a size between 0.4 mm and 1.5 mm and 70 % to 97 % of used fraction of the microporous zeolite mineral grains have a size smaller than 0.4 mm.

Thus, since the microporous zeolite mineral grains are the smaller grains, the water permeability and stability of the top layer can be maintained.

Hereby it can be further envisioned that 70 % to 97 % of the microporous zeolite mineral grains have a grain size between 0.03 mm and 0.06 mm.

It can also be within the present invention that all of the microporous zeolite mineral grains have a grain size, which is smaller than 0.06 mm. Further, it is feasible, that the 20 % to 33 % of the grains of the fraction of the composition, which have a size smaller than 0.06 mm, consist solely of microporous zeolite minerals.

It is further within the present invention that the microporous zeolite mineral has a selected grain size smaller than 1.5 mm and a porosity between 15 % and 20 %. The term "porosity" refers hereby to the volume fraction of void space in a porous article.

According for one embodiment, the moisture level in the microporous zeolite mineral is smaller than 10 %, preferably smaller than 6 %.

It is further within the scope of the invention that the top layer composition further comprises a mixture of elastic granulates.

The material of the elastic granulates can be selected from the group consisting of natural latex, isoprenes, polyisoprenes, styrene butadienes, nitrile rubbers, butyl rubbers, ethylene propylenes terpolymers, silicone rubbers, neoprenes, polysufides, poly acetyls, eperchlorides, fluporoelastomers, hypalon, halogenated butyls, polyurethanes, thermoplastic rubbers and a mixture of the aforementioned materials.

It is envisaged that the elastic granulates have the grain size and grain form as previously described for the brick-dust, quartz sand or volcanic ash. It may also be envisaged, that the elastic granulates have a hardness that is higher than the hardness o the microporous zeolite minerals.

It is also feasible that during the production of the elastic granulates zeolites are added to the formulation. Thus water absorbing elastic granulates can be formed.

It is further within the present invention that the microporous zeolite mineral is charged with a salt, in order to allow for an adsoption and/or desorption effect.

For this embodiment of the invention, the microporous zeolite mineral preferably exhibits a grain size that is between 0.2 mm and 2.2 mm, most preferably between 0.5 mm and 1.5 mm to allow the presence of interstices between said granulates and ensures the presence and maintenance of spaces that make flow and evacuation of water, humidity, or salinated water possible.

The salt of the mixture is incorporated into the microporous mineral such that said mineral is charged ionically with the salt of the mixture. This incorporation also includes coating the microporous mineral with an ionic charge on its outer surface. It should be noted that although the salt used is traditionally NaCI, it can be replaced by any salt that can exhibit equivalent properties. Thus, this salt can be formed by one or a plurality of inorganic cations from the group of alkali metals or alkaline earth metals and/or by one or a plurality of inorganic anions from a group including at least hydroxides, chlorides, and sulfates. Alternatively, the salt can be organic and composed of one or a plurality of salts from a group including at least dicarboxylic acids, formic acids, and acetic acids.

This incorporation of salt into the microporous zeolite mineral allows a synergy to operate between the properties adsoption, absorption and progressive restitution of the microporous zeolite mineral and the properties of lowering the solidification temperature of the water. Actually, in the presence of humidity, the microporous mineral is in a position to adsorb and/or absorb this humidity in order to prevent, on the one hand, the surface formation of a layer of slippery frost, in the case of a negative temperature, and on the other hand, the agglomeration of the substrate elements.

The risk of a layer of frost forming is also reduced thanks to the progressive release, if humidity is present, of the salt incorporated into the microporous mineral. The release of the salt by the microporous mineral in the presence of humidity allows the formation of a saline solution whose solidification temperature is lower than that of water. As this saline solution presents a risk of more reduced solidification during a drop in temperature, it can then be evacuated more easily by means of an appropriate drainage system.
In the context of using the microporous mineral on outside surfaces subject to severe heat, the microporous mineral, loaded with salt and in water, allows a progressive release of the water and the maintenance of relative humidity at the surface of said field. Thus, on a surface subject to severe heat, when it is refreshed by watering, the microporous mineral loaded with salt adsorbs and/or absorbs the water and then progressively releases those water molecules by desorption. This progressive release of the water by the microporous mineral avoids rapid evaporation of the water after watering the surface and allows a lower temperature to be maintained at the level of the field surface compared to the ambient temperature. Said microporous mineral loaded with salt thus allows the amount of watering usually necessary to refresh a field surface to be reduced.

According to one unique aspect of this embodiment, the quantity of salt is at least greater than 10% of the total mass of the composition. This quantity is preferentially at least between 10% and 70% of the total mass of the composition and ideally between 10% and 50% of the total mass of the composition. It should be understood that the quantity of salt incorporated into the zeolite is increased in order to improve the effectiveness of the composition of the invention.

It is further feasible that the microporous zeolite mineral used for any of the above embodiments is at least partly coated with a permeable and/or porous film. The film may be an organic or an inorganic film.

The film may be achieved by means of a natural or synthetic polymer or ceramic. Since the layer is permeable and/or porous, water can be released from or absorbed by the microporous zeolite mineral.

A ceramic film can be advantageous, since the Mohs hardness of ceramics may be much higher than the Mohs hardness of the microporous zeolite mineral. Thus the abrasion of the microporous zeolite mineral during use can be reduced due to the protection film. Due to this, it can be further advatageous that the grain size of the microporous zeolite mineral is distributes between 0.2 and 2.2 mm. In addition, the layer may be uneven, therefore the filmed grain form can be compact and/or sharp-edged and/or cubic, comparable to the grain form of the crushed brick and/or quartz sand and/or volcanic ash.

The coating of the microporous mineral by a permeable film can be total, that is to say, over the whole of the surface of the microporous mineral, or simply partial, that is to say, only on part of the surface of mineral. Preferentially, the coating is done over the whole surface of mineral in order to participate in a optimized manner in slowing down the phenomenon of desorption of water, or even of salt.

For any of the previous embodiments, it is further envisaged that the top layer composition for a playing court, in particular an outside tennis court, is packed in packages with a capacity of less than 500 kg of the top layer composition, preferably packed in packages with a capacity of less than 100 kg and most preferably packed in packages with a capacity of 25 kg. By using packages with small dimensions de-mixing during storage or transport is reduced.

The object of the invention is further met by a method for constructing a tennis court, in which the surface layer material is applied, flattened and compacted on a prepared dynamic layer, which is positioned on a base layer and a filter layer, wherein
- a composition as previously described is applied as the surface layer material
- the flattened composition layer is saturated with water and
- the water-saturated composition layer is compacted.

The compaction of the water-saturated composition layer is preferably performed with a roller weighting more than 500 kg, preferably weighting more than 700 kg, to achieve sufficient compaction. It is also feasible that the compaction is performed with heavy vibratory plates.

According to one embodiment of the tennis court it is advantageously that the dry composition is applied in a layer thickness of 1 to 4 cm, preferably in a layer thickness of 2 to 3 cm.

The object of the invention is further met by sports flooring comprising the top layer composition as described above and a support.

The sports flooring can be constructed on ground areas intended for use in tennis, football, soccer, handball, basketball, badminton or other ball games. The support may be for example the ground plan (e.g. surface of trodden earth), a natural turf, an artificial turf carpet, a dynamic layer or base layer. The top layer composition may be applied in a layer thickness of 1 to 4 cm.

The layer, which is made of the top layer composition, can be composed of a homogeneous mix of crushed brick and/or quartz sand and/or volcanic ash and the microporous zeolite mineral, as described above.

Further it is within the invention that the top layer is composed of two or more sub-layers.

For example, a top layer with two sub-layers can comprise a first sub-layer, which is nearest to the surface, and a second sub-layer, which is situated below the first sub-layer. The first sub-layer can mainly be composed of crushed brick and/or quartz sand and/or volcanic ash and the second sub-layer can be composed of 30 % to 99 % of the microporous zeolite minerals.

The object of the invention is further met by a sports field, in particular a tennis court, with a surface layer bonded by water on a water-permeable superstructure, wherein the surface layer has been produced from a top layer composition as previously described.

The water-permeable superstructure may be a dynamic layer, which is positioned on top of a base layer, which is positioned on top of a filter layer, which is positioned on the ground plan.

It is within the present invention that the sports field further comprises a sprinkler system.

The use of a sprinkler system with the surface layer, which has been produced from a top layer composition as previously described, may be beneficial because it may be used to automatically wet the surface layer. For example this may be a convenient means of watering the surface layer during a time period that is defined based on the minimum release rate of the water from the microporous zeolite mineral. For example, the selected microporous mineral may have a specific surface area which enables the water to steadily release over a time period of two to three hours. In this case, the sprinkler system may be configured to water the surface layer at a predefined time before a tennis match.

According to another aspect of the invention, the previously described top layer composition can be used for building the surface layer of a tennis court.

The utilization can be the construction of a new playing court or to convert or retrofit an existing playing court.

In connection with the aforementioned use, a process is also described, the process comprising: building the surface layer of a tennis court with a previously described top layer composition.

According to another aspect of the invention, the previously described top layer composition can be used as an artificial turf infill for an artificial turf.

For artificial turfs with fibre tufts with a pile height between 1 cm and 2 cm it can be advantageous that the grain size of the microporous zeolite minerals is between 0.2 mm and 2.2 mm, more preferably between 0.5 mm and 2.0 mm.

For artificial turfs with fibre tufts with a pile height smaller than 1 cm it can be advantageous that the grain size of the microporous zeolite minerals is between 0.2 mm and 1.5 mm, more preferably between 0.2 mm and 0.7 mm.

In this context of the aforementioned use, a procedure is also described, the process comprising: fill in or cover an artificial turf with the previously described top layer composition.

It is understood that one or more of the aforementioned embodiments of the invention may be combined as long as the combined embodiments are not mutually exclusive.

In the following embodiments of the invention are explained in greater detail, by way of example only, making reference to drawings in which:
- Fig. 1: illustrates a sports flooring with the top layer composition on a support layer,
- Fig. 2: illustrates an example of an artificial turf with the top layer composition used as an infill material,
- Fig. 3: illustrates an example of an artificial turf which incorporates a sprinkler system and

Like numbered elements in these figures are either equivalent elements or perform the same function. Elements which have been discussed previously will not necessarily be discussed in later figures if the function is equivalent.

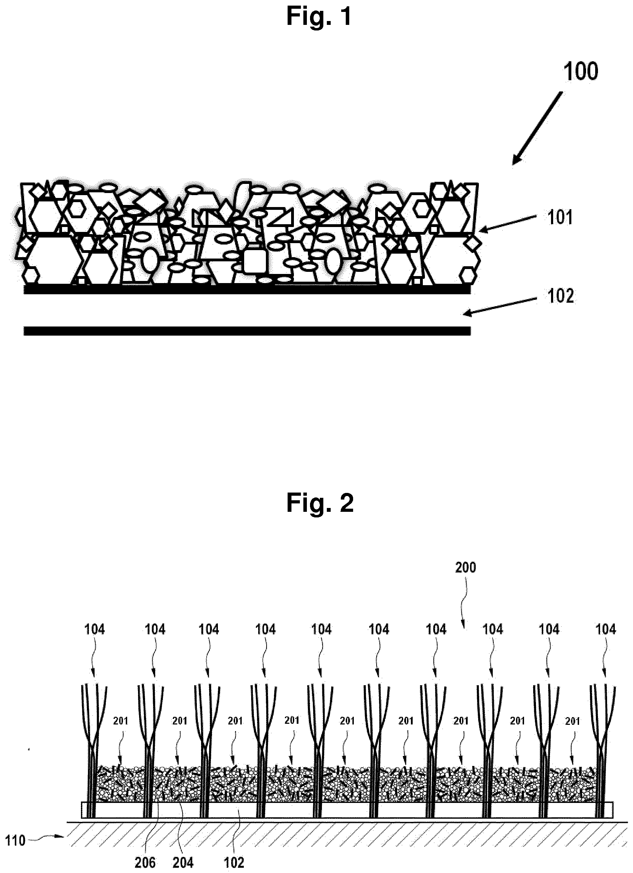

Fig. 1 illustrates a a sports flooring **100** with the top layer composition 101 on a support layer **102.** The sports flooring **100** can be constructed on ground areas intended for use in tennis, football, soccer, handball, basketball, badminton or other ball games. In this shown embodiment however, the sports flooring **100** is a sports flooring for a tennis court. The shown top layer composition **101** comprises a mixture of crushed brick (brick dust) with a grain size smaller than 3.15 mm (here depicted as angular and/or sectional grains) and microporous zeolite minerals (here depicted as oval grains) with a grain size (diameter) between 0.03 mm and 2.2 mm. The support layer **102** is in this embodiment a dynamic layer, as generally used for soft surface outside tennis courts.

Fig. 2 illustrates an artificial turf **200** with the top layer composition **201** used as an infill material. The artificial turf carpet comprises support layer **102,** which is a backing. The artificial turf carpet is a tufted artificial turf carpet in this example. The artificial turf carpet is formed by artificial turf fiber tufts **104** that are tufted into the backing **102.** The artificial turf fiber tufts **104** are tufted in rows. There is row spacing between adjacent rows of tufts. The artificial turf fiber tufts **104** also extent a distance above the backing **102.** The distance that the fibers **104** extend above the backing **102** is the pile height. It can be seen that the artificial turf carpet has been installed by placing or attaching it to the support layer **110,** which may be a ground **110** or a floor. To manufacture the artificial turf **200** the top layer composition **201** as an infill **202** made up of a mixture of crushed brick **204** and microporous zeolite minerals **206** is spread out on the surface and distributed between the artificial turf fiber tufts **104.** Fig. 2 shows the artificial turf carpet **200** after the infill **202** has been spread out and distributed between the artificial turf fiber tufts **104.**

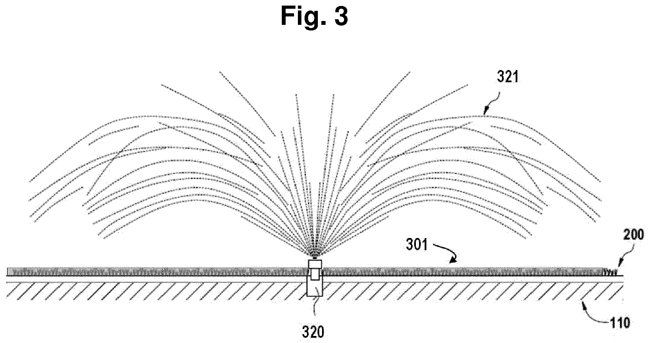

Fig. 3 shows a further example of the artificial turf **200.** In this example an automatic sprinkler system **320** has been integrated into the artificial turf **200.** The sprinkler **320** is depicted as spraying water **321** on an upper surface of the artificial turf **200,** on which a top layer composition **301** is spread out. As can be seen, is the pile height of the top layer composition **301** higher than the pile height of the fiber tufts. The use of an artificial sprinkler may be beneficial in combination with the top layer composition **301** that comprises both the brick-dust or sand and the microporous zeolite minerals. The microporous zeolite minerals may absorb water which through evaporation can help to keep the surface of the artificial turf **200** cool.

## Claims

1. A top layer composition (101; 201; 301) for a playing court, in particular an outside tennis court, the top layer composition comprising a mixture of
- crushed brick (204) and/or quartz sand and/or volcanic ash and
- a microporous zeolite mineral (206),
wherein the microporous zeolite mineral (206) is present in the amount of 5 % to 70 % of the total mass of the top layer composition (101; 201; 301), wherein the grain size of the crushed brick (204) and/or quartz sand and/or volcanic ash is smaller than 3.15 mm, and
wherein the grain size of the microporous zeolite mineral (206) is between 0.03 mm and 2.2 mm.

2. Top layer composition (101; 201; 301) according to claim 1, wherein the grain size distribution of the top layer composition is as follows:
- 20 % to 33 % of the grains have a size smaller than 0.06 mm,
- 20 % to 50 % of the grains have a size between 0.061 mm and 0.7 mm and
- 20 % to 33 % of the grains have a size between 0.71 mm and 2.2 mm.

3. Top layer composition (101; 201; 301) according to any of the preceding claims, in which the microporous zeolite mineral has a selected grain size smaller than 1.5 mm and a porosity between 15 % and 20 %.

4. Top layer composition (101; 201; 301) according to any of the preceding claims, in which 3 % to 30 % of the microporous zeolite mineral grains have a size between 0.4 mm and 1.5 mm and 70 % to 97 % of the microporous zeolite mineral grains have a size smaller than 0.4 mm.

5. Top layer composition (101; 201; 301) according to claim 4, in which 70 % to 97 % of the microporous zeolite mineral grains have a size between 0.03 mm and 0.06 mm.

6. Top layer composition (101; 201; 301) according to any of the preceding claims, wherein the moisture level in the microporous zeolite mineral is smaller than 10 %, preferably smaller than 6 %.

7. Top layer composition (101; 201; 301) according to any of the preceding claims, wherein the top layer composition further comprises a mixture of elastic granulates.

8. Top layer composition (101; 201; 301) according to any of the preceding claims, wherein the microporous zeolite mineral is charged with a salt.

9. Top layer composition (101; 201; 301) according to any of the preceding claims, wherein the microporous zeolite mineral is at least partly coated with a permeable and/or porous film.

10. Top layer composition (101; 201; 301) according to any of the preceding claims, wherein the microporous zeolite mineral is packed in packages with a capacity of less than 500 kg of the microporous zeolite mineral.

11. A method for constructing a tennis court, in which the surface layer material is applied, flattened and compacted on a prepared dynamic layer (102), which is positioned on a base layer and a filter layer, wherein
- a composition (101; 201; 301) of one of the claims 1 to 10 is applied as the surface layer material
- the flattened composition layer is saturated with water and
- the water-saturated composition layer is compacted.

12. The method for constructing a tennis court according to claim 11, wherein the dry composition (101; 201; 301) is applied in a layer thickness of 1 to 4 cm, preferably in a layer thickness of 2 to 3 cm.

13. A sports (100; 200) flooring comprising
- the top layer composition (101; 201; 301) of one of the claims 1 to 10 and
- a support (102).

14. A sports field, in particular a tennis court, with a surface layer bonded by water on a water-permeable superstructure, wherein the surface layer has been produced from a top layer composition (101; 201; 301) according to one of the claims 1 to 10.

15. Use of the top layer composition (101; 201; 301) according to any of the claims 1 to 10 for building the surface layer of a tennis court.

16. Use of the top layer composition (101; 201; 301) according to any of the claims 1 to 10 as an artificial turf infill for an artificial turf.
